# EUROPEAN PATENT SPECIFICATION

(11) **EP 4 470 855 B1**
(45) Date of publication and mention of the grant of the patent: **09.12.2026**
(21) Application number: 23176049.7
(22) Date of filing: 30.05.2023
(51) Int. Cl.: B60T 17/00, F16K 15/06, F16K 11/044

(54) **TWIN CHAMBER AIR DRYER AND ELECTROPNEUMATIC SYSTEM FOR A COMMERCIAL VEHICLE**
ZWEIKAMMER-LUFTTROCKNER UND ELEKTROPNEUMATISCHES SYSTEM FÜR EIN NUTZFAHRZEUG
DESSICCATEUR D'AIR À DEUX CHAMBRES ET SYSTÈME ÉLECTROPNEUMATIQUE POUR UN VÉHICULE UTILITAIRE

(43) Date of publication of application: 04.12.2024
(73) Proprietor: ZF CV Systems Europe BV, 1170 Brüssel (BE)
(72) Inventor: Puto-Jarczak, Monika, 54-047 Wroclaw (PL)
(74) Representative: Copi, Joachim

(56) References cited:
- EP-A2- 0 274 781
- DE-U1- 9 406 642
- US-A- 4 291 719

## Description

The invention generally relates to a twin chamber air dryer for an electropneumatic system of a commercial vehicle and an electropneumatic system comprising the twin chamber air dryer.

### Background of the invention

Electropneumatic systems in commercial vehicles generally comprise a compressor, an air dryer unit for drying and filtering the compressed air delivered by the compressor, and consumer circuits supplied with the dried compressed air, wherein the consumer circuits in particular include pneumatic brake circuits and air suspension systems. The air dryer unit generally comprises one or more desiccant cartridges filled with moisture-absorbing materials like granulate. The compressed air is dried or de-moisturized in drying modes (supply modes), and the dried compressed air is then supplied to the subsequent consumer circuits. The desiccant cartridge is afterwards regenerated or purged in a regeneration mode, in which air flows in the reverse direction through the desiccant cartridge to a venting outlet.

To provide a continuous flow of compressed air, twin chamber air dryers are known, which comprise two desiccant cartridges operated in alternating supplying modes. In a first supply mode, the compressed air flows through the first desiccant cartridge and a first inlet of the double check valve to an air outlet which is connected to the consumer circuits. In this first supply mode, the second desiccant cartridge is generally purged by a steady flow of compressed air flowing in the reverse direction. Subsequently, a control unit switches into the second supply mode, in which the air streams are reversed, thereby using the second desiccant cartridge for drying or de-moisturizing the compressed air and purging the first desiccant cartridge. An electropneumatic valve assembly is provided for switching between the two supply modes, the electropneumatic valve assembly can be controlled by an electronic control unit, which therefore switches between the supply modes. The double check valve usually consists of a valve casing with two valve seats each sealed by an own valve body, in particular valve balls. The valve bodes are therefore biased by a spring connecting the two valve bodies, each of the valve bodies serving as a check valve for closing its valve seat in the non-supply mode, and opening when charged with pressurized air from the inlet side of its valve seat.

However, the spring-mass configuration of this conventional double check valve may cause oscillation or vibrations in the twin chamber air dryer, and therefore can lead to noise generation. Further, the check valve body oscillation can lead to wearing of the components, in particular a sealing o-ring, and therefore result in leakages.

A twin chamber air dryer with a double check valve and a bleed passage connecting first and second valve inlets of the double check valve is disclosed in U.S. Patent 4 291 719 A.

### Summary of the invention

It is therefore an object of the invention to provide a twin chamber air dryer and an electropneumatic system comprising such a twin chamber air dryer, which offer a steady supply of compressed air with reduced drawbacks.

According to one aspect of the invention, a twin chamber air dryer according to claim 1 is provides. Furthermore, an electropneumatic system comprising the twin chamber air dryer is provided. The subclaims describe preferred embodiments.

Thus, the twin chamber air dryer comprises a double check valve with a valve body for closing both valve seats alternatingly, and without spring bias acting onto the valve body. In particular, only one single valve body is provided.

These amendments lead to a simplification of the double check valve and therefore to a reduction of costs. Furthermore, the above-mentioned problems of spring-mass systems and oscillations resulting from the air stream charging the valve body can be reduced or eliminated.

The pressure difference between the two valve inlets causes the valve body to seal the valve seat of the lower pressure channel. Thus, the valve body remains stationary until the next subsequent switching between the supply modes and cartridges, when the valve body changes its position and seals the other channel.

The inventive features lead to a simplification of the hardware design, since the spring can be omitted and only one single valve body is inserted. Thus, the costs and bearing problems are reduced. The position of the valve body is only defined by the pressure difference; no additional spring forces act onto the valve body and therefore, oscillations due to counter-acting stream forces and spring forces cannot appear.

According to a preferred embodiment, a throttle function for bypassing the double check valve can be realized inside the double check valve, preferably in its valve body. In particular, the valve body can be provided with an orifice, which therefore provides a continuous air stream between the valve inlets.

In the first supply mode, the air supply stream flows into the first valve inlet, through the valve interior and leaves the valve interior through the valve outlet; the purging air stream for regenerating the second desiccant cartridge flows through the orifice of the valve body, then into the outlet of the passive second desiccant cartridge and leaves the second desiccant cartridge at its inlet. In the second supply mode, the supply air stream flows correspondingly through the second desiccant cartridge, thereby regenerating the first desiccant cartridge. Thus, the additional function of the bypass throttle can be realized without further equipment, in particular only by forming an orifice in the valve body.

According to a preferred embodiment, the valve body comprises a sealing ring receiving area, in particular a ring-shaped shoulder, for the two opposite sealing o-rings, and protrusions extending outwards from the sealing ring receiving area.

The protrusions preferably extend into the respective valve inlets and/or supply conduits connecting the valve inlets; thus, the protrusions and the supply conduits together form a guiding or guidance for the valve body, which therefore is prevented from inclining or tilting in the valve interior. Thus, a safe guiding even without a spring bias is secured, without additional efforts or hardware equipment. The protrusions can be formed as rods, plates or blades extending in a lateral axial direction, for contacting the interior faces of the valve inlets and/or supply conduits.

The twin chamber air dryer comprises a die-cast casing, in particular made of metal, in particular a die-cast casing containing the double check valve and at least a part of the additional valve subassembly. For example, a check valve provided downstream of the valve outlet can be realized by a bore in the die-cast, said bore extending to the valve interior area of the double check valve. The double check valve can be realized by cavities or bores extending in the lateral direction, wherein the valve interior can be formed in a larger part of the cavity, one valve seat being realized by the die-cast casing, and the opposite valve seat being realized by a valve seat insert inserted into the die-cast casing. Thus, low-effort production and assembly can be realized.

The valve assembly preferably comprises switching valves, in particular pneumatically controlled 3/2 switching valves connected to the respective cartridge inlets of the two dryer cartridges, wherein each switching valve connects the dryer inlet with either an air inlet of the twin chamber air dryer, to be connected to the compressor, or to a venting outlet for venting exhaust air from purging the desiccant cartridge. The control of the switching valves is preferably realized by an electropneumatic control valve, to be electrically controlled by an ECU.

### Brief description of the drawings

The invention is hereinafter described in detail with reference to the accompanying drawings, wherein
- Fig. 1: is a pneumatic scheme of a twin chamber air dryer according to an embodiment of the invention;
- Fig. 2: is a cross-sectional view of the casing with interior valves:
- Fig. 3: is a side view of a valve body according to an embodiment of the invention;
- Fig. 4: is a perspective view of the valve body of fig. 3;
- Fig. 5: is a front view of the valve body of fig. 3;
- Fig. 6: is a side view of a valve body according to a further embodiment of the invention; and
- Fig. 7: is a perspective view of the valve body of fig. 6;

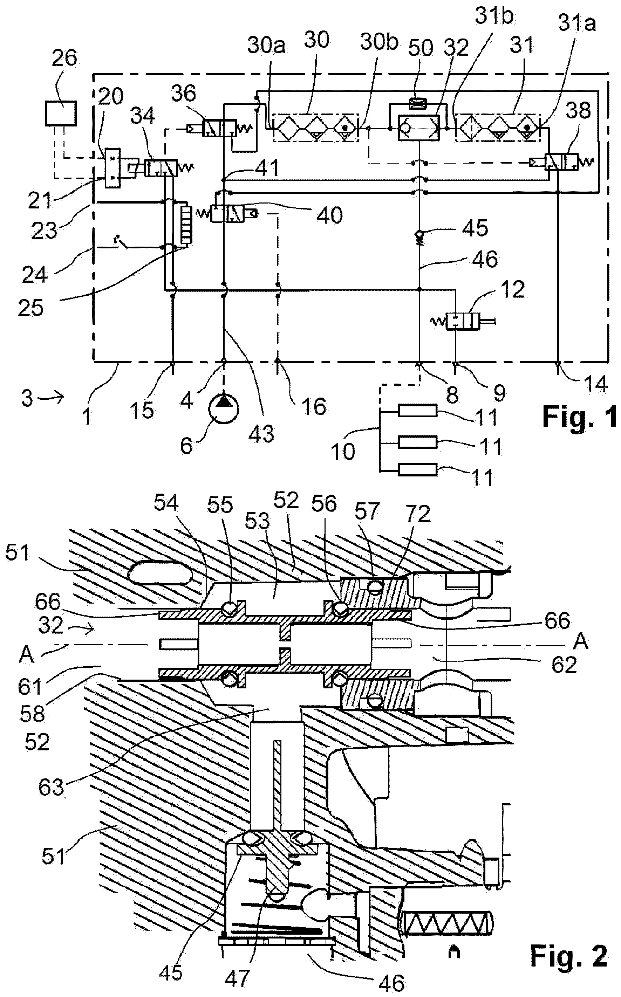

Fig. 1 depicts a pneumatic scheme of a twin chamber air dryer 1 according to an embodiment of the invention. The twin chamber air dryer 1 is provided in a commercial vehicle 2 as part of an electropneumatic system 3. The twin chamber air dryer 1 comprises several pneumatic ports:
an air inlet 4 to be connected to a compressor 6, an air outlet 8, a second air outlet 9 connected to the first air outlet 8 via a blocking valve 12, a first venting outlet 14 and a second venting outlet 15, and a pneumatic control inlet 16.

These pneumatic ports 4, 8, 9, 14, 15, 16 are connected to further elements of the electropneumatic system 3:
The air outlet 8 is connected to a gallery 10, which constitutes a pneumatic pipe system for supplying several pneumatic consumer circuits 11 of the commercial vehicle, in particular a brake system and a suspension system; the venting outlets 14 and 15 can be realized as a common single venting outlet to be connected to an exhaust.

Furthermore, the twin chamber air dryer 1 comprises the following electric connections: a first electric control input 20 and a second electric control input 21, to be supplied with a control voltage U, as well as a first heating contact 23 and a second heating contact 24, for supplying a heating voltage to a heater element 25, in particular for heating the twin chamber air dryer 1 or a die-cast casing 51 of the twin chamber air dryer 1 and avoiding moisture condensation. The electric control inputs 20, 21 receive a control voltage U from an electronic control unit ECU 26, for switching between the drying modes or drying phases, as is described hereinafter.

The twin chamber air dryer 1 is operated in first drying mode and a second drying mode (first and second drying phase or supply phase), wherein the ECU 26 switches the twin chamber air dryer 1 between the two drying modes. For this purpose, the twin chamber air dryer 1 comprises a first desiccant cartridge 30 and a second desiccant cartridge 31, both comprising moisture absorbing materials, e. g. granulates, a double check valve 32, and a pneumatic valve arrangement of pneumatic valves 12, 34, 36, 38, 40, 45 for switching between the first and second drying mode. In both drying modes, the twin chamber air dryer 1 is supplied with compressed air from the compressor 6 to its inlet port 4, delivers dried compressed air via its air outlet 8, and exhausts or vents humid air via its venting outlet 14.

In the basic state shown in Fig. 1, the twin chamber air dryer 1 is switched in the first drying mode, in which the first desiccant cartridge 30 is active and dries compressed air received at the air inlet 4; the second desiccant cartridge 31 is passive and therefore switched into its regeneration phase for purging and de-moisturizing. In this first drying mode, compressed air is delivered from the compressor 6 into the air inlet 4 and an air supply line 43. A spring loaded pneumatically controlled 3/2-operating valve 40 remains in its open basic position and therefore, a branching point 41 of the air supply line 43 is provided with compressed air.

A first switching valve 36 and a second switching valve 38 are each provided as pneumatically controlled 3/2 valves, which connect a cartridge input of the first desiccant cartridge 30 and the second desiccant cartridge 31 to either the air inlet 4 or the venting outlet 14, respectively, in an alternating manner. In the depicted first drying mode, the first switching valve 36 connects the air inlet 4 to the first cartridge inlet 30a of the first desiccant cartridge 30, which dries the compressed air and delivers dried compressed air at its first cartridge outlet 30b, which, in turn, is connected to a pneumatic control port of the second switching valve 38. The second switching valve 38 is thereby activated and connects the second cartridge inlet 31a of the second cartridge 31 with the venting outlet 14. Thus, in the first drying mode, compressed air delivered into the air inlet 4 flows through the first desiccant cartridge 30, which absorbs the humidity in the compressed air, and dried compressed air is delivered from the first cartridge outlet 30b to the double check 32, which switches into its first open position and forwards the dried compressed air via a check valve 45 and an air outlet line 46 to the air outlet 8.

Switching between the drying phases is accomplished by the ECU 26, which outputs a switching voltage U to the electric control inputs 20, 21, thereby electrifying a 3/2 solenoid (electropneumatic) control valve 34 and switching it from its depicted basic position into its actuated position, in which the pressurized air outlet line 46 is connected to the pneumatic control port of the first switching valve 36, thereby switching the first switching valve 36 into its actuated position, in which the connection between the air supply line 43 and the first cartridge inlet 30a is blocked, and the first cartridge inlet 30a is connected to the venting outlet 14. Thus, the compressed air in the first desiccant cartridge 30 and the pneumatic line between the first cartridge outlet 30b and the double check valve 32 is depressurized, and therefore, the connected pneumatic control port of the second switching valve 38 is depressurized and switches due to its spring load into its basic position, in which it connects the air supply line 43 with the second cartridge inlet 31a. Therefore, pressurized air supplied via the air supply line 43 is now delivered to the second cartridge inlet 31a, flows through the first desiccant cartridge 31 to the double check valve 32, and is afterwards delivered via the air outlet line 46 to the air outlet 8.

The double check valve 32 comprises a throttle bypass 50 connecting the two cartridge outlets 30b and 31b and thereby enabling a small purging air stream from the respective pressurized cartridge outlet 30b or 31b to the passive cartridge outlet 31b or 30b, respectively, wherein the purging air stream flows through the passive desiccant cartridge 31 or 30 to the venting outlet 14. In the embodiment describes hereinafter, the throttle bypass 50 is realized internally in the double check valve 32.

Fig. 2 shows a cross-sectional view of relevant parts and elements of the twin chamber air dryer 1, including the double check valve 32 and the check valve 45. The double check valve 32 comprises a valve casing 52, which can be part of the die-cast casing 51 of the twin chamber air dryer 1, a valve interior 53, which in Fig. 2 is realized as a bore in the valve casing 52, a first valve seat 54 and a second valve seat 56, which are both formed in the valve casing 52, and a valve body 60 inserted into the valve interior 53. The valve body 60 is provided with a first sealing ring 55 for abutting on the first valve seat 54 and a second sealing ring 57 for abutting on the second valve seat 56.

The double check valve 32 comprises a first valve inlet 61 connected to the first cartridge outlet 30b, a second valve inlet 62 connected to the second cartridge outlet 31b, and a valve outlet 63 connected to the check valve 45 and the air outlet line 46. The double check valve 32 therefore switches between its first valve position, corresponding to the first drying mode, in which the first valve inlet 61 is connected to the valve outlet 63, and the second valve position, in which the first valve inlet 61 is closed, and the open second valve inlet 62 is connected to the valve outlet 63. The valve body 60 is received in the valve casing 52 without spring load. The valve body 60 is realized by a single one-part body valve 60, which is shifted in an axial lateral direction A between the first valve seat 54 and the second valve seat 56. The pressure difference between the two valve inlets 61 and 62 shifts the valve body 60 to the lower pressure channel and therefore, the valve body 60 abuts on the lower pressure valve seat and seals it, thereby opening the air passage between the higher pressure channel and the valve outlet 63. The force generated by the pressure difference causes the double check valve 32 to remain stationary until the next subsequent switching between the drying modes occurs when the pressure difference changes and therefore, the force direction is switched or flipped, thereby forcing the valve body 60 to change its position and to seal the other channel.

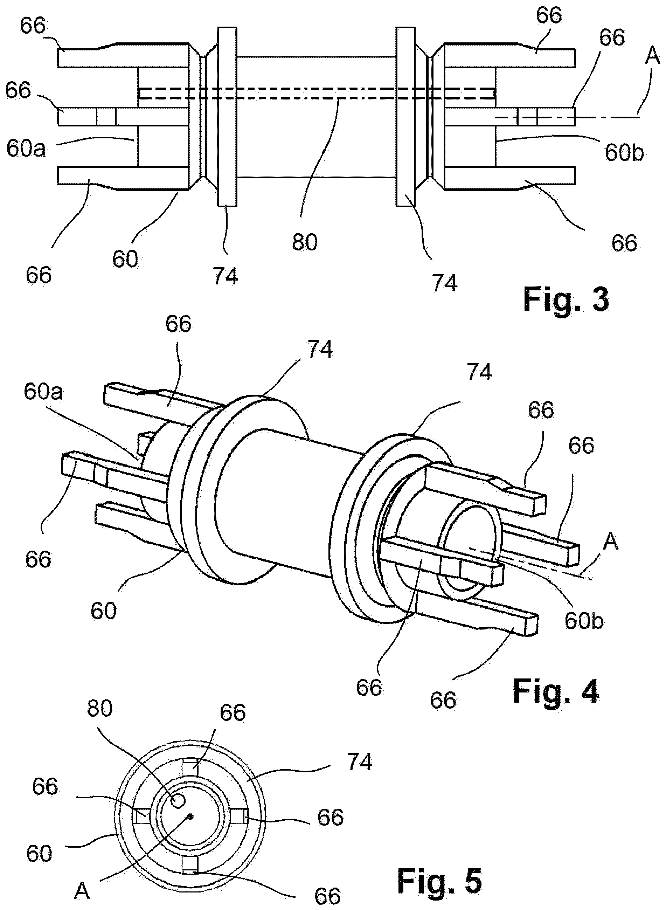

According to the embodiment of fig. 2 to 5, the valve body 60 comprises protrusions 66 extending in lateral direction into air conduits 58 provided as bores in the die-casted valve casing 52. The protrusions 66 and the air conduits 58 therefore serve as guidings for the valve body 60 in its lateral movement. According to the embodiment of fig. 2, one of the valve seats, in this embodiment the second valve seat 56, is formed at a valve seat insert 72 inserted into the casing 52. However, a reverse configuration of the valve seats 54 and 56 is possible. The valve body 60 comprises two shoulders 74 for fixing the sealing rings (O-rings) 55 and 57. The throttle bypass 50 is realized as an orifice 80 in the internal walls, allowing a small air passage for venting the passive desiccant cartridge 31 or 30 from its cartridge inlet 31a or 30a, respectively, to its cartridge outlet 31b or 30b. Thus, the functional means of a throttle bypass 50 can be realized without additional hardware.

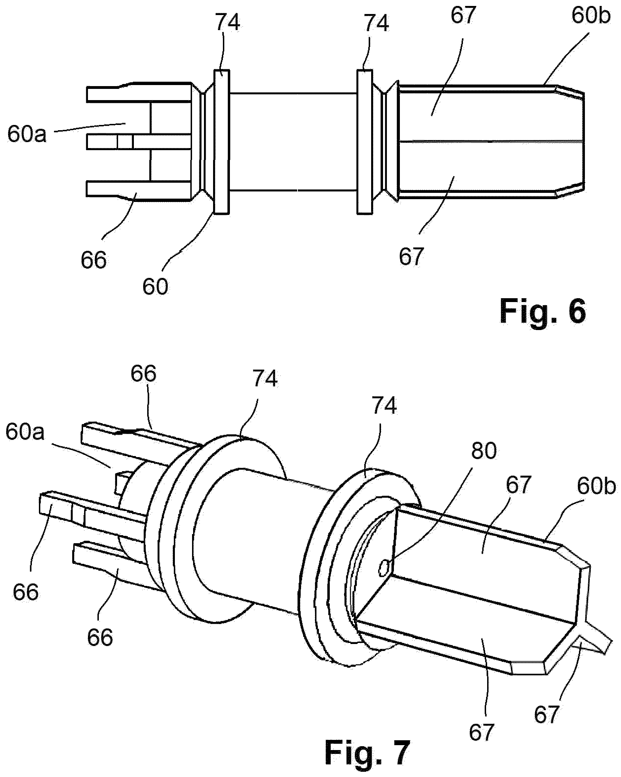

In the embodiments of Fig. 2 to 5, the protrusions 66 of the first side 60a and the second side 60b of the valve body 60 comprise an equal or similar form, in particular with three rods extending in axial lateral direction A. According to the embodiment of Fig. 6 and 7, the protrusions 66, 67 at the first side 60a and the second side 60b may differ. According to Fig. 6, 7, protrusions 66, 67 may be formed by rods or plates and/ or triangles or; the form of the protrusions 66 can be adapted to the form of the corresponding valve seats 54, 56 and air conduits connected to the valve seats 54, 56.

The valve body 60 can be made of plastic material or metal, in particular as a single part. However, a construction of two parts permanently connected to each other, for example by welding, is also possible.

According to Fig. 2, the double check valve 52 and the check valve 45 are both realized by cavities or bores in the die-cast casing 51. The check valve 45 comprises a spring-loaded check valve body 47 received in a bore or cavity of the cast casing 51. Thus, a simple, space-saving design with low costs can be realized. Further valves of the valve assembly can also be formed in the die-cast casing 51.

### List of reference numerals

- 1: twin chamber air dryer
- 2: commercial vehicle
- 3: electropneumatic system
- 4: air inlet
- 6: compressor
- 8: air outlet
- 9: second air outlet
- 10: gallery
- 11: consumer circuits
- 12: blocking valve, e. g. manually operated
- 14: venting outlet
- 15: second venting outlet
- 16: pneumatic control inlet
- 20: first electric control input
- 21: second electric control input
- 23, 24: heating contacts
- 26: ECU
- 30: first desiccant cartridge
- 30a: first cartridge inlet
- 30b: first cartridge outlet
- 31: second desiccant cartridge
- 31a: second cartridge inlet
- 31b: second cartridge outlet
- 32: double check valve
- 34: electropneumatic 3/2 control valve
- 36: first switching valve
- 38: second switching valve
- 40: spring loaded pneumatically controlled 3/2-operating valve
- 41: branching point

- 43: air supply line
- 45: check valve
- 46: air outlet line
- 47: check valve body of the check valve 45
- 50: throttle bypass
- 51: die-cast casing of the twin chamber air dryer 1
- 52: valve casing of the double check valve 32, realized as part of the die-cast casing 51

- 53: valve interior
- 54: first valve seat
- 55: first sealing ring
- 56: second valve seat
- 57: second sealing ring
- 58: air conduits
- 60: valve body
- 61: first valve inlet
- 62: second valve inlet
- 63: valve outlet
- 66: protrusions with rods
- 67: protrusions with plates
- 72: valve seat insert
- 74: shoulders
- 75: internal wall
- 80: orifice
- A: lateral direction

## Claims

1. A twin chamber air dryer (1), for use in an electropneumatic system (3) of a commercial vehicle (2), said twin chamber air dryer (1) comprising:
- an air inlet (4) to be supplied with compressed air from a compressor (6),
- an air outlet (8) for delivering dried compressed air,
- a venting outlet (14) for exhausting air,
- a valve arrangement (12, 34, 36, 38, 40, 45),
- a double check valve (32), said double check valve (32) comprising a first valve inlet (61), a second valve inlet (62), a valve outlet (63), a valve casing (52) containing a valve interior (53), a first valve seat (54), a second valve seat (56), and a valve body (60) being provided in said valve interior (53),
- a throttle bypass (50) connecting said first valve inlet (61) and said second valve inlet (62),
- a first dryer cartridge (30) connected to said first valve inlet (61), and a second dryer cartridge (31) connected to said second valve inlet (62),
said valve body (60) being switchable between
- a first valve position corresponding to a first drying mode, in which an air passage between said first valve inlet (61) and said valve outlet (63) is open and said second valve inlet (62) is closed, and
- a second valve position corresponding to a second drying mode, in which an air passage between said second valve inlet (62) and said valve outlet (63) is open and said first valve inlet (61) is closed,
said valve arrangement (12, 34, 36, 38, 40, 45) being provided to switch said twin chamber air dryer (1) between said first drying mode and said second drying mode, wherein
said valve body (60) is provided in said valve interior (53) without spring bias, and said valve body (60) is displaceable between said first valve seat (54) and said second valve seat (56), **characterized in that** said twin chamber air dryer (1) comprises a cast casing (51), in particular a metal die-cast casing,
said valve casing (52) being formed as an area in said cast casing (51), wherein a check valve (45) is provided between said valve outlet (63) and said air outlet (8), said check valve (45) comprising a check valve body (47) provided in a bore of said cast casing (51), wherein one of said valve seats is provided in said cast part, and the other valve seat being provided by a valve seat insert (72) inserted into said cast part (51).

2. A twin chamber air dryer (1) according to claim 1, wherein said valve arrangement (12, 34, 36, 38, 40, 45) is provided for switching between said first drying mode and said second drying mode by connecting said dryer cartridges (30, 31) and said double check valve (32) selectively with said air inlet (4), said air outlet (8), and said venting outlet (14).

3. A twin chamber air dryer (1) according to claim 1 or 2, wherein said throttle bypass (50) is realized as an orifice (80) provided in said valve body (60), said orifice (80) comprising a smaller cross-sectional area than said valve inlets (61, 62) and/ or said valve seats (54, 56).

4. A twin chamber air dryer (1) according to one of the preceding claims, wherein said valve body (60) is made as a single one-piece body, or
said valve body (60) is made of two or more parts being permanently connected.

5. A twin chamber air dryer (1) according to one of the preceding claims, wherein said valve body (60) is displaceable in a lateral direction (A) and comprises protrusions (66, 67) at its lateral ends,
said protrusions (66, 67) extending into said first valve inlet (61) and said second valve inlet (62), respectively,
said protrusions (66, 67) being guided in said valve inlets (61, 62) and/or said valve body (60) being guided by said protrusions (66, 67) in its displacement motion between said first and second valve position.

6. A twin chamber air dryer (1) according to claim 5, wherein
said valve body (60) comprises sealing ring receiving areas (74) at its lateral ends (60a, 60b),
a sealing ring (55) being disposed on each of said sealing ring receiving areas (74), respectively,
said protrusions (66, 67) extending from said ring sealing receiving areas (74) outwards into said valve inlets (61, 62), respectively.

7. A twin chamber air dryer (1) according to claim 6, wherein each of said sealing ring receiving areas (74) comprises a shoulder formed as an annular wall or ring

8. A twin chamber air dryer (1) according to one of the preceding claims, said valve assembly comprising:
a first pneumatically controlled 3/2 switching valve (36) connected to a first dryer inlet (30a) of said first dryer cartridge (30), and a second switching valve (38) connected to a second dryer inlet (31a) of said second dryer cartridge (31),
said first switching valve (36) and said second switching valve (38) being connected to said air inlet (4) and said venting outlet (31), respectively, and
said first switching valve (36) and said second switching valve (38) are alternatingly switchable between their respective open positions,
wherein a control valve (34), in particular an electropneumatic control valve (34), is provided for switching between said first and second dryer mode.

9. An electropneumatic system (3) for use in a commercial vehicle (2), said electropneumatic system (3) comprising
a compressor (6), pneumatic consumer circuits (11), and a twin chamber air dryer (1) according to one of the preceding claims,
said air inlet (4) of said twin chamber air dryer (1) being connected to said compressor (6) for receiving compressed air, and
said air outlet (8) of said twin chamber air dryer (1) being connected to said pneumatic consumer circuits (11) for delivering dried compressed air.

## Patentansprüche

1. Doppelkammerlufttrockner (1) zur Verwendung in einem elektropneumatischen System (3) eines Nutzfahrzeugs (2), der Doppelkammerlufttrockner (1) umfassend:
- einen Lufteinlass (4), der mit Druckluft von einem Kompressor (6) zu versorgen ist,
- einen Luftauslass (8) zum Abgeben getrockneter Druckluft,
- einen Entlüftungsauslass (14) zum Abführen von Luft,
- ein Ventilarrangement (12, 34, 36, 38, 40, 45),
- ein Doppelrückschlagventil (32), das Doppelrückschlagventil (32) umfassend einen ersten Ventileinlass (61), einen zweiten Ventileinlass (62), einen Ventilauslass (63), ein Ventilgehäuse (52), das ein Ventilinneres (53) enthält, einen ersten Ventilsitz (54), einen zweiten Ventilsitz (56) und einen Ventilkörper (60), der in dem Ventilinneren (53) bereitgestellt ist,
- einen Drossel-Bypass (50), der den ersten Ventileinlass (61) und den zweiten Ventileinlass (62) verbindet,
- eine erste Trocknerkartusche (30), die mit dem ersten Ventileinlass (61) verbunden ist, und eine zweite Trocknerkartusche (31), die mit dem zweiten Ventileinlass (62) verbunden ist,
wobei der Ventilkörper (60) umschaltbar ist zwischen
- einer ersten Ventilstellung, die einem ersten Trocknungsmodus entspricht, in der ein Luftdurchlass zwischen dem ersten Ventileinlass (61) und dem Ventilauslass (63) geöffnet ist und der zweite Ventileinlass (62) geschlossen ist, und
- einer zweiten Ventilstellung, die einem zweiten Trocknungsmodus entspricht, in der ein Luftdurchlass zwischen dem zweiten Ventileinlass (62) und dem Ventilauslass (63) geöffnet ist und der erste Ventileinlass (61) geschlossen ist,
wobei das Ventilarrangement (12, 34, 36, 38, 40, 45) bereitgestellt ist, um den Doppelkammerlufttrockner (1) zwischen dem ersten Trocknungsmodus und dem zweiten Trocknungsmodus umzuschalten, wobei
der Ventilkörper (60) in dem Ventilinneren (53) ohne Federvorspannung bereitgestellt ist, und
der Ventilkörper (60) zwischen dem ersten Ventilsitz (54) und dem zweiten Ventilsitz (56) verschiebbar ist, **dadurch gekennzeichnet, dass** der Doppelkammerlufttrockner (1) ein Gussgehäuse (51), insbesondere ein Metalldruckgussgehäuse, umfasst,
wobei das Ventilgehäuse (52) als ein Bereich in dem Gussgehäuse (51) ausgebildet ist,
wobei ein Rückschlagventil (45) zwischen dem Ventilauslass (63) und dem Luftauslass (8) bereitgestellt ist, das Rückschlagventil (45) umfassend einen Rückschlagventilkörper (47), der in einer Bohrung des Gussgehäuses (51) bereitgestellt ist, wobei einer der Ventilsitze in dem Gussteil bereitgestellt ist und der andere Ventilsitz durch einen Ventilsitzeinsatz (72), der in das Gussteil (51) eingesetzt ist, bereitgestellt ist.

2. Doppelkammerlufttrockner (1) nach Anspruch 1, wobei das Ventilarrangement (12, 34, 36, 38, 40, 45) zum Umschalten zwischen dem ersten Trocknungsmodus und dem zweiten Trocknungsmodus durch wahlweises Verbinden der Trocknerkartuschen (30, 31) und des Doppelrückschlagventils (32) mit dem Lufteinlass (4), dem Luftauslass (8) und dem Entlüftungsauslass (14) bereitgestellt ist.

3. Doppelkammerlufttrockner (1) nach Anspruch 1 oder 2, wobei der Drossel-Bypass (50) als eine Öffnung (80), die in dem Ventilkörper (60) bereitgestellt ist, realisiert ist, die Öffnung (80) umfassend einen kleineren Querschnittsbereich als die Ventileinlässe (61,62) und/oder die Ventilsitze (54, 56).

4. Doppelkammerlufttrockner (1) nach einem der vorstehenden Ansprüche, wobei der Ventilkörper (60) als ein einziger einstückiger Körper hergestellt ist, oder
der Ventilkörper (60) aus zwei oder mehr Teilen, die dauerhaft verbunden sind, hergestellt ist.

5. Doppelkammerlufttrockner (1) nach einem der vorstehenden Ansprüche, wobei der Ventilkörper (60) in eine laterale Richtung (A) verschiebbar ist und an seinen lateralen Enden Vorsprünge (66, 67) umfasst,
sich die Vorsprünge (66, 67), in den ersten Ventileinlass (61) beziehungsweise den zweiten Ventileinlass (62) erstrecken,
die Vorsprünge (66, 67) in den Ventileinlässen (61, 62) geführt werden und/oder
der Ventilkörper (60) bei seiner Verschiebebewegung zwischen der ersten und der zweiten Ventilstellung durch die Vorsprünge (66, 67) geführt wird.

6. Doppelkammerlufttrockner (1) nach Anspruch 5, wobei
der Ventilkörper (60) Dichtungsringaufnahmebereiche (74) an seinen lateralen Enden (60a, 60b) umfasst,
ein Dichtungsring (55) jeweils an jedem der Dichtungsringaufnahmebereiche (74) angeordnet ist,
sich die Vorsprünge (66, 67) von den Ringdichtungsaufnahmebereichen (74) jeweils nach außen in die Ventileinlässe (61, 62) erstrecken.

7. Doppelkammerlufttrockner (1) nach Anspruch 6, wobei jeder der Dichtungsringaufnahmebereiche (74) einen Vorstand, der als eine ringförmige Wand oder ein Ring ausgebildet ist, umfasst.

8. Doppelkammerlufttrockner (1) nach einem der vorstehenden Ansprüche, die Ventilanordnung umfassend:
ein erstes pneumatisch gesteuertes 3/2-Schaltventil (36), das mit einem ersten Trocknereinlass (30a) der ersten Trocknerkartusche (30) verbunden ist, und ein zweites Schaltventil (38), das mit einem zweiten Trocknereinlass (31a) der zweiten Trocknerkartusche (31) verbunden ist,
wobei das erste Schaltventil (36) und das zweite Schaltventil (38) mit dem Lufteinlass (4) beziehungsweise dem Entlüftungsauslass (31) verbunden sind, und
das erste Schaltventil (36) und das zweite Schaltventil (38) zwischen ihren jeweiligen Offenstellungen abwechselnd schaltbar sind,
wobei ein Steuerventil (34), insbesondere ein elektropneumatisches Steuerventil (34), zum Umschalten zwischen dem ersten und dem zweiten Trocknermodus bereitgestellt ist.

9. Elektropneumatisches System (3) zur Verwendung in einem Nutzfahrzeug (2), das elektropneumatische System (3) umfassend
einen Kompressor (6), pneumatische Verbraucherkreise (11) und einen Doppelkammerlufttrockner (1) nach einem der vorstehenden Ansprüche,
wobei der Lufteinlass (4) des Doppelkammerlufttrockners (1) mit dem Kompressor (6) zum Aufnehmen von Druckluft verbunden ist, und
der Luftauslass (8) des Doppelkammerlufttrockners (1) mit den pneumatischen Verbraucherkreisen (11) zum Abgeben getrockneter Druckluft verbunden ist.

## Revendications

1. Dessicateur d'air à deux chambres (1) destiné à être utilisé dans un système pneumatique (3) d'un véhicule utilitaire (2), ledit dessicateur d'air à deux chambres (1) comprenant :
- une entrée d'air (4) destinée à être alimentée à l'air comprimé par un compresseur (6),
- une sortie d'air (8) destinée à délivrer de l'air comprimé séché,
- une sortie de ventilation (14) destinée à évacuer l'air,
- un agencement de soupapes (12, 34, 36, 38, 40, 45),
- un clapet de non-retour double (32), ledit clapet de non-retour double (32) comprenant une première entrée de soupape (61), une seconde entrée de soupape (62), une sortie de soupape (63), un carter de soupape (52) contenant un intérieur de soupape (53), un premier siège de soupape (54), un second siège de soupape (56), et un corps de soupape (60) étant prévu dans ledit intérieur de soupape (53),
- une dérivation de papillon (50) reliant ladite première entrée de soupape (61) et ladite seconde entrée de soupape (62),
- une première cartouche de séchage (30) reliée à ladite première entrée de soupape (61), et une seconde cartouche de séchage (31) reliée à ladite seconde entrée de soupape (62),
ledit corps de soupape (60) étant commutable entre
- une première position de soupape correspondant à un premier mode de séchage, dans laquelle un passage d'air entre ladite première entrée de soupape (61) et ladite sortie de soupape (63) est ouvert et ladite seconde entrée de soupape (62) est fermée, et
- une seconde position de soupape correspondant à un second mode de séchage, dans laquelle un passage d'air entre ladite seconde entrée de soupape (62) et ladite sortie de soupape (63) est ouvert et ladite première entrée de soupape (61) est fermée,
ledit agencement de soupapes (12, 34, 36, 38, 40, 45) étant prévu pour commuter ledit dessicateur d'air à deux chambres (1) entre ledit premier mode de séchage et ledit second mode de séchage, dans lequel
ledit corps de soupape (60) est disposé dans ledit intérieur de soupape (53) sans sollicitation par ressort, et
ledit corps de soupape (60) peut être déplacé entre ledit premier siège de soupape (54) et ledit second siège de soupape (56), **caractérisé en ce que** ledit dessiccateur d'air à deux chambres (1) comprend un carter coulé (51), en particulier un carter métallique moulé sous pression,
ledit carter de soupape (52) étant formé en tant que zone dans ledit carter coulé (51),
dans lequel un clapet de non-retour (45) est prévu entre ladite sortie de soupape (63) et ladite sortie d'air (8), ledit clapet de non-retour (45) comprenant un corps de clapet de non-retour (47) prévu dans un alésage dudit carter coulé (51), dans lequel l'un desdits sièges de soupape est prévu dans ladite pièce coulée, et l'autre siège de soupape étant pourvu d'un insert de siège de soupape (72) inséré dans ladite partie coulée (51).

2. Dessicateur d'air à deux chambres (1) selon la revendication 1, dans lequel ledit agencement de soupapes (12, 34, 36, 38, 40, 45) est prévu pour commuter entre ledit premier mode de séchage et ledit second mode de séchage en reliant lesdites cartouches de séchage (30, 31) et ledit double clapet de non-retour (32) sélectivement à ladite entrée d'air (4), à ladite sortie d'air (8) et à ladite sortie de ventilation (14).

3. Dessicateur d'air à deux chambres (1) selon la revendication 1 ou 2, dans lequel ladite dérivation d'étranglement (50) est réalisée sous la forme d'un orifice (80) prévu dans ledit corps de soupape (60), ledit orifice (80) comprenant une zone de section transversale plus petite que lesdites entrées de soupape (61, 62) et/ou lesdits sièges de soupape (54, 56).

4. Dessicateur d'air à deux chambres (1) selon l'une des revendications précédentes, dans lequel ledit corps de soupape (60) est réalisé sous la forme d'un corps unique monobloc, ou
ledit corps de soupape (60) est constitué de deux pièces ou plus reliées de manière permanente.

5. Dessicateur d'air à deux chambres (1) selon l'une des revendications précédentes, dans lequel ledit corps de soupape (60) peut être déplacé dans une direction latérale (A) et comprend des saillies (66, 67) à ses extrémités latérales,
lesdites saillies (66, 67) s'étendant dans ladite première entrée de soupape (61) et ladite seconde entrée de soupape (62), respectivement,
lesdites saillies (66, 67) étant guidées dans lesdites entrées de soupape (61, 62) et/ou
ledit corps de soupape (60) étant guidé par lesdites saillies (66, 67) dans son mouvement de déplacement entre lesdites première et seconde positions de soupape.

6. Dessicateur d'air à deux chambres (1) selon la revendication 5, dans lequel
ledit corps de soupape (60) comprend des zones de réception de bague d'étanchéité (74) à ses extrémités latérales (60a, 60b),
une bague d'étanchéité (55) étant disposée sur chacune desdites zones de réception de bague d'étanchéité (74), respectivement,
lesdites saillies (66, 67) s'étendant depuis lesdites zones de réception d'étanchéité annulaire (74) vers l'extérieur dans lesdites entrées de soupape (61, 62), respectivement.

7. Dessicateur d'air à deux chambres (1) selon la revendication 6, dans lequel chacune desdites zones de réception de bague d'étanchéité (74) comprend un épaulement formé en tant que paroi annulaire ou bague

8. Dessicateur d'air à deux chambres (1) selon l'une des revendications précédentes, ledit ensemble soupape comprenant :
une première soupape de commutation 3/2 à commande pneumatique (36) connectée à une première entrée de sécheur (30a) de ladite première cartouche de sécheur (30), et une seconde soupape de commutation (38) connectée à une seconde entrée de sécheur (31a) de ladite seconde cartouche de sécheur (31),
ladite première soupape de commutation (36) et ladite seconde soupape de commutation (38) étant reliées à ladite entrée d'air (4) et à ladite sortie d'évacuation (31), respectivement, et
ladite première soupape de commutation (36) et ladite seconde soupape de commutation (38) peuvent être commutées alternativement entre leurs positions ouvertes respectives,
dans lequel une soupape de commande (34), en particulier une soupape de commande électropneumatique (34), est prévue pour commuter entre lesdits premier et second modes de séchage.

9. Système électropneumatique (3) destiné à être utilisé dans un véhicule utilitaire (2), ledit système électropneumatique (3) comprenant
un compresseur (6), des circuits consommateurs pneumatiques (11), et un dessicateur d'air à deux chambres (1) selon l'une des revendications précédentes,
ladite entrée d'air (4) dudit dessicateur d'air à deux chambres (1) étant reliée audit compresseur (6) permettant de recevoir de l'air comprimé, et
ladite sortie d'air (8) dudit dessicateur d'air à deux chambres (1) étant reliée auxdits circuits consommateurs pneumatiques (11) permettant de distribuer de l'air comprimé séché.
